**Europäisches Patentamt**

**European Patent Office**

**Office européen des brevets**

(19)

(11) Veröffentlichungsnummer: **0 083 918**
**B1**

(12) **EUROPÄISCHE PATENTSCHRIFT**

(45) Veröffentlichungstag der Patentschrift:
04.09.85

(51) Int. Cl.⁴: **G 02 C 1/06**

(21) Anmeldenummer: **82890187.6**

(22) Anmeldetag: **23.12.82**

(54) **Brillenfassung aus Kunststoff.**

(30) Priorität: **12.01.82 AT 78/82**

(43) Veröffentlichungstag der Anmeldung:
**20.07.83 Patentblatt 83/29**

(45) Bekanntmachung des Hinweises auf die Patenterteilung:
**04.09.85 Patentblatt 85/36**

(84) Benannte Vertragsstaaten:
**BE CH DE FR GB IT LI NL SE**

(56) Entgegenhaltungen:
**DE - A - 842 855**
**GB - A - 2 017 332**
**US - A - 2 270 382**
**US - A - 3 904 282**

(73) Patentinhaber: **A. Schmied Silhouette-Modellbrillen Fabrikationsgesellschaft m.b.H., Ellbognerstrasse 24, A-4021 Linz (AT)**

(72) Erfinder: **Schmied, Arnold, Hanriederstrasse 25, A-4020 Linz (AT)**

(74) Vertreter: **Hübscher, Gerhard, Dipl.-Ing. et al, Patentanwälte Dipl.-Ing. Gerhard Hübscher Dipl.-Ing. Helmut Hübscher Dipl.-Ing. Heiner Hübscher Spittelwiese 7, A-4020 Linz (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf eine Brillenfassung aus Kunststoff mit einem in sich geschlossenen Rahmen für die Brillengläser, die mit Hilfe eines in eine Ringnut eingreifenden Wulstes im Rahmen befestigbar sind.

Bei Kunststoff-Brillenfassungen werden die mit einem Randwulst versehenen Brillengläser in eine Ringnut des in sich geschlossenen Rahmens eingesetzt, wobei das elastische Verhalten des Kunststoffes und ggf. die sich bei einer Erwärmung des Rahmens ändernden Materialeigenschaften ausgenützt werden. Durch das Umschliessen der Brillengläser mit dem Rahmen wird nicht nur ein fester Halt der Brillengläser, sondern auch eine entsprechende Steifigkeit des Brillenrahmens und damit der Brillenfassung erreicht. Allerdings kann die Stärke des Kunststoffrahmens wegen des notwendigen Querschnittes nicht unter ein bestimmtes Mass verringert werden, so dass Brillenfassungen aus Kunststoff vergleichsweise stark ausgebildet sind, was nicht nur aus modischen Gründen, sondern auch aus Gründen des Gewichtes in vielen Fällen unerwünscht ist.

Um Brillengläser nicht in geschlossenen Rahmen fassen zu müssen, ist es vor allem bei Metallfassungen bekannt, die Brillengläser in eine Halbfassung ohne unteren Fassungsrand einzusetzen, wobei eine mit der Halbfassung verbundene Schnur den unteren Fassungsrand ersetzt. Da diese Schnur in eine Nut der Brillengläser eingelegt ist, bleibt sie weitgehend unsichtbar. Nachteilig bei dieser Konstruktion ist, dass einerseits das Spannen der Schnur Schwierigkeiten macht und anderseits die an der Halbfassung im Bereich des Nasensteges und des Ansatzes der Brillenbügel angreifende Schnur nichts für die Verwindungssteifigkeit der Fassung beitragen kann. Gerade im Bereich des Ansatzes des Brillenbügels ist daher mit Verwindungen des Rahmens zu rechnen, und zwar mit der Gefahr, dass die Brillengläser aus dem Rahmen herausgedrückt werden. Wenn für Metallfassungen noch eine tragbare Biegesteifigkeit sichergestellt werden kann, so ist dies aufgrund der Werkstoffeigenschaften bei Brillenfassungen aus Kunststoff kaum möglich, was vergleichbare Konstruktionen für Brillenfassungen aus Kunststoff von vornherein ausschliesst.

Um im Randbereich dicker Brillengläser sich ergebende Reflexionsringe zu vermeiden, wurde für geschlossene Rahmen bereits vorgeschlagen (GB-A Nr. 739493), den Wulst in den Rahmen zu verlegen und das Brillenglas mit der Ringnut zu versehen, doch muss hierfür der Metallrahmen geteilt und der geteilte Rahmen über Schliessstücke mittels einer Schliessschraube geschlossen werden, was die Konstruktion für Kunststoff-Brillenfassungen ungeeignet macht, weil über die Schliessstücke keine ausreichende Festigkeit erzielt werden kann.

Damit bei randlosen Brillen der Nasensteg nicht an den Brillengläsern angeschraubt werden muss, was mit einer Bruchgefahr für die Gläser verbunden ist, ist es schliesslich bekannt (DE-A Nr. 842855), die Brillengläser mit einer im Querschnitt V-förmigen Ringnut zu versehen und die Fassung so in diese Ringnut einzubetten, dass sie nicht über die Brillengläser vorragt. Nachteilig bei dieser bekannten Konstruktion ist vor allem, dass wegen der Forderung, die Fassung innerhalb der Umrisslinie der Brillengläser unterzubringen ein schnappverschlussartiges Einrasten der Brillengläser in die Fassung ausgeschlossen ist. Dazu kommt noch, dass eine solche Fassung nur für die Verbindung der Brillengläser im Bereich des Nasensteges, nicht aber für den Ansatz von Brillenbügeln geeignet ist, die zusätzliche Belastungen ergeben.

Der Erfindung liegt somit die Aufgabe zugrunde, diese Mängel zu vermeiden und eine Brillenfassung der eingangs geschilderten Art mit einfachen Mitteln so zu verbessern, dass die Stärke des Rahmens ohne Beeinträchtigung der Festigkeit der Brillenfassung wesentlich herabgesetzt werden kann.

Die Erfindung löst die gestellte Aufgabe dadurch, dass die Ringnut in die Brillengläser eingearbeitet ist, dass der Wulst in einem in sich geschlossenen Ring auf der Innenseite des Rahmens verläuft und zumindest auf einer Rahmenseite eine geneigte Anlauffläche bildet und dass die Basisbreite des Wulstes grösser als die Nutbreite des Brillenglases ist.

Da der Rahmen den für die Halterung der Brillengläser erforderlichen Wulst in Form eines in sich geschlossenen Ringes bildet, kann die Stärke des Rahmens wesentlich verringert werden, ohne die Querschnittsfläche gegenüber Rahmen mit einer Ringnut an irgendeiner Umfangsstelle verringern zu müssen. Aufgrund der hinsichtlich eines Spritzgiessens günstigeren Form kann sogar der tragende Querschnitt des Rahmens auf die durch die gewünschte Festigkeit geforderte Mindeststärke reduziert werden, ohne befürchten zu müssen, dass die gewählte Querschnittsabmessung aus spritztechnischen Gründen zu gering sei. Mit der angegebenen Massnahme kann daher die Stärke des Rahmens gegenüber den bisher bekannten Kunststoffrahmen entscheidend verkleinert werden, so dass der optische Eindruck mit dem einer Metallfassung verglichen werden kann. Bei der Wahl von durchsichtigem Kunststoff kann sogar der Eindruck einer randlosen Brillen erreicht werden.

Die vergleichsweise hohe Festigkeit würde jedoch das Einsetzen eines Brillenglases in eine solche Fassung trotz des elastischen Verhaltens des Kunststoffes unmöglich machen oder behindern, wenn nicht für eine geneigte Anlauffläche des Wulstes zumindest auf einer Rahmenseite gesorgt wird. Wird das Brillenglas von dieser Rahmenseite her in den Rahmen gedrückt, so gleitet das Brillenglas entlang der Anlauffläche unter gleichzeitiger Dehnung des Rahmens, bis der Wulst in die Ringnut des Glases einrastet. Da die Basisbreite des Wulstes grösser als die Nutbreite des Brillenglases gewählt ist, liegt in eingerastetem Zustand des Brillenglases der Wulst an den Nutkanten des Brillenglases an, was eine sichere und spielfreie Halterung der Brillengläser sicherstellt, die ja von der Fassung mit einer gewissen Vorspannung umschlossen werden.

Besonders vorteilhafte Verhältnisse ergeben sich, wenn die Querschnittsform des Wulstes im wesentlichen einem gleichschenkeligen Dreieck entspricht, was symmetrische Verhältnisse schafft, die nicht nur für die Herstellung der Brillenfassung, sondern auch für das Einsetzen des Brillenglases günstige Bedingungen schaffen können.

Der Wulst muss hinsichtlich seiner Querschnittsform so gestaltet sein, dass er einerseits die an ihn gestellten Festigkeitsanforderungen erfüllen und anderseits ein problemloses Einsetzen der Brillengläser gewährleisten kann. Diese Anforderungen werden erfüllt, wenn der Scheitelwinkel des im Querschnitt dreieckförmigen Wulstes 60 bis 90°, vorzugsweise 75° beträgt. Bei der Einhaltung dieser Scheitelwinkel wird eine Anlauffläche erhalten, die das Eindrücken der Brillengläser in den Rahmen besonders unterstützt, ohne dass die Halterung der eingesetzten Brillengläser gefährdet wird.

Hinsichtlich der Festigkeit werden bei einer entsprechenden Wahl des Kunststoffes ausreichende Werte sichergestellt, wenn die in Richtung der Wulsthöhe gemessene Dicke des Rahmens der zwei- bis vierfachen, vorzugsweise der dreifachen Wulsthöhe entspricht. Bei üblichen Grössenverhältnissen ergibt sich damit eine Rahmendicke in der Grössenordnung von 1 mm.

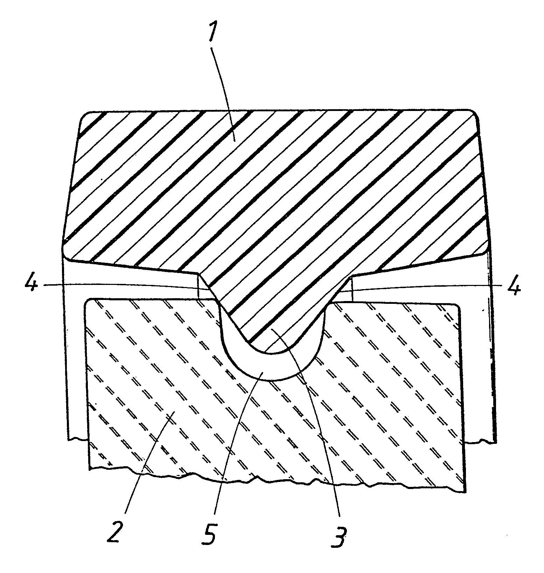

In der Zeichnung ist der Erfindungsgegenstand beispielsweise dargestellt, und zwar wird eine erfindungsgemässe Brillenfassung im Querschnitt in einem vergrösserten Massstab gezeigt.

Die Brillenfassung weist einen in sich geschlossenen Rahmen 1 aus Kunststoff zur Aufnahme eines Brillenglases 2 auf. Zur Befestigung dieses Brillenglases 2 bildet der Rahmen 1 auf seiner dem Brillenglas zugekehrten Innenseite einen in sich geschlossenen, ringförmigen Wulst 3, der im Querschnitt im wesentlichen einem gleichschenkeligen Dreieck mit einem Scheitelwinkel von etwa 75° entspricht. Die durch diese Dreiecksform sich ergebenden Seitenflächen des Wulstes 3 bilden geneigte Anlaufflächen 4, die erst das Einsetzen der Brillengläser 2 erlauben, weil die Brillengläser entlang dieser Anlaufflächen 4 gleiten können, bis der Wulst 3 in eine Ringnut 5 des Brillenglases 2 einrastet.

Da einerseits die Basis des bezüglich seines Querschnittes dreieckförmigen Wulstes 3 breiter als die Nut 5 gewählt ist und anderseits die Nut 5 eine im wesentlichen halbkreisförmige Querschnittsform aufweist, legen sich die Anlaufflächen 4 des Wulstes 3 an die Längsränder der Ringnut 5 an, so dass sich wegen der Vorspannung der Umfassung eine spielfreie Halterung der Brillengläser 2 im Rahmen 1 ergibt, und zwar unabhängig von den auftretenden Toleranzen.

Wie sich aus der Zeichnung unmittelbar ergibt, kann bei einer vergleichbaren Querschnittsfläche der dargestellte Rahmen gegenüber einem herkömmlichen Rahmen einer Brillenfassung mit einer Ringnut wesentlich dünner ausgebildet werden, so dass die erforderliche Festigkeit bereits sichergestellt ist, wenn bei einer entsprechenden Wahl des Kunststoffes die in Richtung der Wulsthöhe gemessene Dicke des Rahmens 1 der zwei- bis dreifachen Wulsthöhe entspricht.

## Patentansprüche

1. Brillenfassung aus Kunststoff mit einem in sich geschlossenen Rahmen (1) für die Brillengläser (2), die mit Hilfe eines in eine Ringnut (5) eingreifenden Wulstes (3) im Rahmen (1) befestigbar sind, dadurch gekennzeichnet, dass die Ringnut (5) in die Brillengläser (2) eingearbeitet ist, dass der Wulst in einem in sich geschlossenen Ring auf der Innenseite des Rahmens (1) verläuft und zumindest auf einer Rahmenseite eine geneigte Anlauffläche (4) bildet und dass die Basisbreite des Wulstes (3) grösser als die Nutbreite des Brillenglases (2) ist.

2. Brillenfassung nach Anspruch 1, dadurch gekennzeichnet, dass die Querschnittsform des Wulstes (3) im wesentlichen einem gleichschenkeligen Dreieck entspricht.

3. Brillenfassung nach Anspruch 2, dadurch gekennzeichnet, dass der Scheitelwinkel des im Querschnitt dreieckförmigen Wulstes (3) 60 bis 90°, vorzugsweise 75°, beträgt.

4. Brillenfassung nach einem der Ansprüche 1 bis 3, dadurch gekennzeichnet, dass die in Richtung der Wulsthöhe gemessene Dicke des Rahmens (1) der zwei- bis vierfachen, vorzugsweise der dreifachen Wulsthöhe entspricht.

## Claims

1. A plastics spectacle frame comprising a closed rim (1) for the lenses (2), which are adapted to be secured in the rim by means of a bead (3), which extends into an annular groove (5), characterized in that the annular groove (5) is formed in the lenses (2), that the bead constitutes a closed ring extending on the inside of the rim (1) and forms an inclined ramp surface (4) at least on one side of the rim and that the base width of the bead (3) exceeds the width of the groove in the lens (2).

2. A spectacle frame according to Claim 1, characterized in that the bead (3) has substantially the shape of an isosceles triangle in cross-section.

3. A spectacle frame according to Claim 2, characterized in that the bead (3), which is triangular in cross-section, has an apex angle of 60 to 90°, preferably 75°.

4. A spectacle frame according to any of Claims 1 to 3, characterized in that the thickness of the rim (1) measured in the direction of the height of the bead is twice to four times, preferably three times, the height of the bead.

## Revendications

1. Monture de lunettes en matière synthétique comportant un cadre fermé sur lui-même (1) pour les verres de lunettes (2) qui peuvent être fixés dans le cadre (1) à l'aide d'un bourrelet (3) s'engageant dans une gorge annulaire (5), caractérisée par le fait que la gorge annulaire (5) est ménagée dans les verres de lunettes (2), que le bourrelet est dirigé en un anneau fermé sur lui-même sur le côté intérieur du cadre (1) et forme au moins sur un côté du cadre une surface de butée inclinée (4) et que la largeur du bourrelet (3) à la base est plus grande que la largeur de la gorge du verre de lunettes (2).

2. Monture de lunettes selon la revendication 1, caractérisée par le fait que la forme de section du bourrelet (3) correspond pratiquement à un triangle isocèle.

3. Monture de lunettes selon la revendication 2, caractérisée par le fait que l'angle au sommet du bourrelet (3) à section triangulaire est de 60 à 90°, de préférence de 75°.

4. Monture de lunettes selon l'une des revendications 1 à 3, caractérisée par le fait que l'épaisseur du cadre (1), mesurée dans la direction de la hauteur du bourrelet, correspond de deux à quatre fois, de préférence à trois fois la hauteur du bourrelet.